# DEMANDE DE BREVET EUROPEEN

(11) **EP 0 531 211 A1**
(43) Date de publication de la demande: **10.03.1993**
(21) Numéro de dépôt: 92402405.2
(22) Date de dépôt: 03.09.1992
(51) Int. Cl.: G06F 13/42

(54) **Procédé d'optimisation du cycle en lecture d'un microprocesseur ou d'un microcontrôleur à adresses-données multiplexées**

(30) Priorité: 04.09.1991 FR 9110919
(71) Demandeur: GEC ALSTHOM SA, F-75116 Paris (FR)
(72) Inventeur: Jamet, Dominique, F-69100 Villeurbanne (FR)
(74) Mandataire: Fournier, Michel

(57) **Abrégé**

L'invention concerne un procédé d'optimisation du cycle en lecture d'un microprocesseur ou d'un microcontrôleur à adresses-données multiplexées, les données étant fournies par une mémoire ou par un autre circuit périphérique, caractérisé en ce que, au début du cycle de lecture du microprocesseur (1) ou du microcontrôleur, on autorise la mémoire (2) ou l'autre circuit périphérique à sortir leurs données sur un bus intermédiaire avant la phase active de lecture du microprocesseur ou du microcontrôleur et pendant que ceux-ci fournissent leurs adresses, les données entrées sur le bus intermédiaire étant ensuite transférées, en phase active de lecture, sur le bus du microprocesseur ou du microcontrôleur.

## Description

La présente invention concerne un procédé d'optimisation du cycle en lecture d'un microprocesseur ou d'un microcontrôleur à adresses-données multiplexées.

Un microprocesseur, ou un microcontrôleur, à adresses-données multiplexées doit lire des données qui lui sont accessibles par un périphérique extérieur ou qui sont stockées en mémoires. Ces données doivent pouvoir être lues rapidement. Les microprocesseurs à adresses-données multiplexées actuels sont des systèmes très performants. Ils sont très rapides et en avance technologique par rapport aux autres matériels de la microinformatique.

Pour une utilisation correcte de tels microprocesseurs, il faut que les vitesses de fonctionnement des microprocesseurs et celles des mémoires ou des périphériques soient harmonisées.

Dans le cas des mémoires, on connaît des mémoires rapides, capables de fonctionner avec ces microprocesseurs. Elles ont cependant le grand inconvénient d'être chères et de ne pas être disponibles pour une gamme de température étendue.

Pour les autres circuits périphériques, il faut aussi que ces circuits soient rapides, donc chers, lorsqu'ils existent à ces vitesses.

Le remède classique apporté à cette situation est de ralentir la vitesse de fonctionnement des microprocesseurs pour pouvoir les utiliser correctement. Ceci est bien sûr une solution pénalisante.

L'invention permet de remédier à ce problème par l'utilisation d'un bus intermédiaire qui autorise l'accès aux données dans le temps voulu. Ce bus intermédiaire peut avantageusement être constitué par un ou plusieurs éléments tampons. Il existe des éléments tampons rapides, peu chers, largement disponibles et utilisables pour des gammes de température étendues.

L'invention à donc pour objet un procédé d'optimisation du cycle en lecture d'un microprocesseur ou d'un microcontrôleur à adresses-données multiplexées, les données étant fournies par une mémoire ou par un autre circuit périphérique, caractérisé en ce que, au début du cycle de lecture du microprocesseur ou du microcontrôleur, on autorise la mémoire ou l'autre circuit périphérique à sortir leurs données sur un bus intermédiaire avant la phase active de lecture du microprocesseur ou du microcontrôleur et pendant que ceux-ci fournissent leurs adresses, les données entrées sur le bus intermédiaire étant ensuite transférées, en phase active de lecture, sur le bus du microprocesseur ou du microcontrôleur.

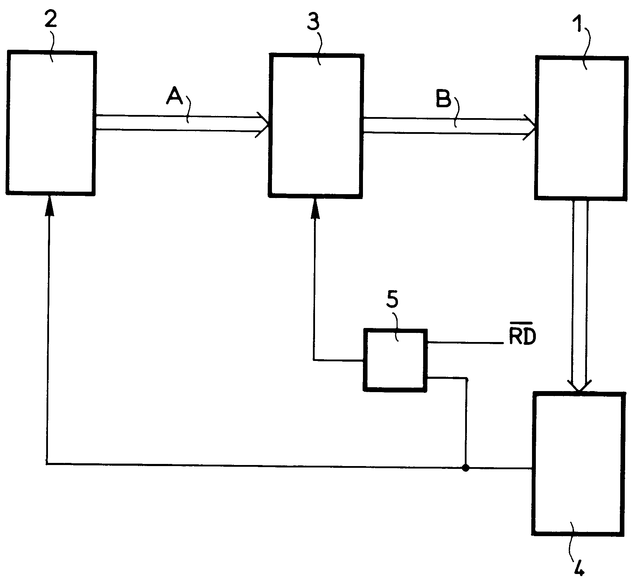

L'invention sera mieux comprise et d'autres avantages apparaîtront à la lecture de la description qui va suivre, donnée à titre non limitatif, accompagnée de la figure annexée qui représente un circuit comprenant un microprocesseur devant lire des données contenues dans une mémoire, ce circuit utilisant le procédé d'optimisation selon l'invention.

Dans la figure annexée, la référence 1 désigne un microprocesseur mais il pourrait s'agir d'un microcontrôleur. Le microprocesseur doit lire des données contenues dans la mémoire 2. Le circuit 3 est un élément tampon servant de bus intermédiaire pour recevoir des données en cours de transfert. L'élément tampon 3 est un élément contrôlé ou à validation.

Lorsque le microprocesseur doit lire des données, il génère ses adresses en début de cycle. Les adresses permettent, grâce au décodeur 4, de faire le décodage du circuit périphérique à lire, en l'occurrence la mémoire 2.

Le bus de données de la mémoire 2 étant validé en permanence, la mémoire est autorisée à fournir ses données. Elle les sort sur le bus A. L'élément tampon 3 n'est pas immédiatement autorisé à les transmettre sur le bus B destiné à les acheminer au microprocesseur 1.

Lorsque les adresses du microprocesseur sont fournies, le microprocesseur passe en phase active de lecture et son signal Read passe, dans l'exemple choisi de logique négative, à l'état bas. La porte 5 autorise alors l'élément tampon 3 à transmettre au microprocesseur les données qu'il retenait. Le microprocesseur lit les données et finit son cycle.

## Revendications

**1/** Procédé d'optimisation du cycle en lecture d'un microprocesseur ou d'un microcontrôleur à adresses-données multiplexées, les données étant fournies par une mémoire ou par un autre circuit périphérique, caractérisé en ce que, au début du cycle de lecture du microprocesseur (1) ou du microcontrôleur, on autorise la mémoire (2) ou l'autre circuit périphérique à sortir leurs données sur un bus intermédiaire avant la phase active de lecture du microprocesseur ou du microcontrôleur et pendant que ceux-ci fournissent leurs adresses, les données entrées sur le bus intermédiaire étant ensuite transférées, en phase active de lecture, sur le bus du microprocesseur ou du microcontrôleur.

**2/** Procédé d'optimisation selon la revendication 1, caractérisé en ce que le bus intermédiaire est constitué par un ou plusieurs éléments tampons (3).
